# EUROPÄISCHE PATENTSCHRIFT

(11) **EP 1 185 451 B1**
(45) Veröffentlichungstag und Bekanntmachung des Hinweises auf die Patenterteilung: **06.05.2004**
(21) Anmeldenummer: 00945686.4
(22) Anmeldetag: 23.05.2000
(51) Int. Cl.: B62D 65/00

(54) **VERFAHREN UND VORRICHTUNG ZUM AUFBRINGEN VON FOLIEN AUF WANDABSCHNITTE EINER FAHRZEUGKAROSSERIE**
METHOD AND DEVICE FOR APPLYING FILMS ONTO WALL SECTIONS OF A MOTOR VEHICLE BODY
PROCEDE ET INSTALLATION PERMETTANT D'APPLIQUER DES FEUILLES SUR DES PARTIES DE PAROI D'UNE CARROSERIE DE VEHICULE

(30) Priorität: 14.06.1999 DE 19927105
(43) Veröffentlichungstag der Anmeldung: 13.03.2002
(73) Patentinhaber: CWW-GERKO Akustik GmbH, 67547 Worms (DE)
(72) Erfinder: FREIST, Christoph, D-33613 Bielefeld (DE); POLAK, Josef, D-55294 Bodenheim (DE); HOTZ, Ernst, D-69250 Schönau (DE); PLATE, Karl, D-53347 Alfter (DE)
(74) Vertreter: Leineweber, Jürgen, Dipl.-Phys.
(86) Internationale Anmeldenummer: PCT/EP2000/004679
(87) Internationale Veröffentlichungsnummer: WO 2000/076750

(56) Entgegenhaltungen:
- EP-A- 0 152 594
- DE-A- 3 803 636
- DE-A- 19 527 613
- DE-A- 19 812 402
- DE-U- 29 712 202
- US-A- 5 219 264
- US-A- 5 267 385
- US-A- 5 887 800

## Beschreibung

Die Erfindung betrifft ein Verfahren zum Aufbringen von Folien auf Wandabschnitte einer Fahrzeugkarosserie im Zuge einer Fließbandproduktion des Fahrzeugs. Außerdem bezieht sich die Erfindung auf für die Durchführung dieser Verfahren geeignete Einrichtungen.

Im Fahrzeugbau ist es bekannt, zur Erzielung akustischer Maßnahmen und auch zu Versteifungszwecken Folien einzusetzen. Zu den akustischen Maßnahmen gehören die (Körper-)Schalldämmung, -dämpfung, -isolation, -absorption, -reflexion usw. Auf größere Blechwandabschnitte aufgebrachte Folien haben nicht nur akustische, zum Beispiel entdröhnende, sondern auch stabilisierende bzw. versteifende Wirkungen.

Der Begriff "Folie" hat sich im hier betroffenen Fachjargon unabhängig von ihrem Zweck durchgesetzt. Es handelt sich um Schichtabschnitte, die je nach dem zu erzielenden Effekt den unterschiedlichsten Aufbau (Einschicht- oder Mehrschichtsysteme aus unterschiedlichen Werkstoffen, häufig Bitumen) haben können. Der allgemeine Begriff "Folie" wird im folgenden beibehalten.

Folien dieser Art werden in vielen Bereichen eines Fahrzeuges eingesetzt. Dazu gehören innere Oberflächenabschnitte von
- Türen (zwei oder vier),
- Seitenwänden (zum Beispiel bei zwei Türen),
- Radkästen, insbesondere die an den Fahrgastraum angrenzenden Radkästen,
- Bodenbleche (zum Beispiel je zwei vorne und/oder hinten), auch im Kofferraum,
- Blechwänden zwischen Motorraum und Fahrgastraum,
- Dachinnenseite (überkopf),
- Motorraum.

Häufig besteht auch der Bedarf, Folien auf Außenwandabschnitte aufzubringen, z.B. auf die Bodenbleche oder auf den Motorraum begrenzende Blechwände.

Auch die Innenseiten von Hauben (Motor-, Kofferraum) sind in der Regel mit Folien beschichtet. Hauben dieser Art werden üblicherweise unabhängig von der Fahrzeugkarosserie hergestellt. Die Erfindung ist auch bei der Ablage von Folien auf Innenabschnitte von Fahrzeugteilen dieser oder ähnlicher Art im Zuge separat dafür eingerichteter Montagelinien einsetzbar.

Das Aufbringen von Folien auf Innen- oder Außenwandabschnitte von Fahrzeugen kann durch andere Aufbauten behindert sein. Dieses gilt zum Beispiel für Türen, die in der Regel aus Stabilitätsgründen 2-schalig aufgebaut sind. Die dem Fahrgastraum zugewandte Seitenwand eines Türkastens ist mit Öffnungen ausgerüstet, durch die auf die Innenfläche der äußeren Seitenwand zu applizierende Folien hindurch geführt werden müssen. Dieser Vorgang ist um so schwieriger, je kleiner die Öffnungen in der inneren Seitenwand des Türkastens oder je größer die Folien sind, zumal die Folien haftend wirken, sei es infolge von Klebekräften (auf die Folie aufgebrachte Klebeschicht) oder von Magnetkräften (in der Folie befindliches Magnetmaterial, insbesondere in Form von Pulvern). Applikationen von Folien dieser Art sind zeitaufwendig und nicht postionsgenau. Es ist deshalb bekannt, die gewünschte akustisch und/oder versteifende Schicht mit Hilfe einer Spritzpistole aufzuspritzen.

Die Ablage bzw. das Aufbringen von Folien oder gespritzten Schichten auf Wandabschnitte von Fahrzeugen oder Fahrzeugteilen erfolgt von Hand. Bei modernen Fertigungslinien sind häufig zehn und mehr Personen damit beschäftigt, verschiedene, jeweils angelieferte Folien auf die dazu vorgesehenen Innenwandabschnitte aufzubringen. In dieser Phase ist die Karosserie noch im Rohzustand, das heißt, die Karosserieteile sind zusammengeschweißt, ihre Oberfläche ist grundiert. Damit die Folien bis zu ihrem endgültigen Verschmelzen mit dem jeweiligen Blechwandabschnitt auf vertikalen Flächen oder bei der Überkopfmontage haften bleiben, sind die auf einer Seite mit einer Haftkleberschicht versehen. Eine andere Möglichkeit besteht darin, mit ferro-magnetischen Zusätzen versehene Folien einzusetzen, die auf den Blechabschnitten aufgrund von Magnetkräften vorläufig haften. Nach dem in dieser Weise durchgeführten Aufbringen der Folien auf die zugehörigen Innenwandabschnitte der Rohkarosserie, erfolgt deren Lackierung.

Üblicherweise werden mehrere Lackschichten aufgetragen. Anschließend wird die Karosserie durch einen Ofen hindurch geführt, in dem die Trocknung des Lackes stattfindet. Außerdem erfolgt durch die Wärmewirkung das endgültige Aufschmelzen der Folien auf ihren jeweiligen Wandabschnitten. Die dadurch erreichte vollflächige Auflage der Folien auf ihrer jeweiligen Unterlage ist eine notwendige Voraussetzung dafür, das der mit dem Aufkleben der Folien gewünschte Effekt auch sicher erreicht wird.

Nachteilig an dem bekannten Verfahren zum Aufbringen der Folien auf ihre zugehörigen Blechabschnitte ist, dass die Entstehung von Staub und insbesondere Flusen unvermeidbar ist. Diese bleiben auf der Oberfläche der Rohkarosserie haften, welche anschließend lackiert wird. Die Folge ist, dass die in den Lackschichten eingefangenen Flusen zu ungleichmäßigen Lackoberflächen führen. Diese müssen durch Schleifen, erneutes Lackieren und Trocknen nachgearbeitet werden. Weiterhin ist das bekannte Verfahren aufgrund des hohen Aufwandes an Handarbeit relativ teuer.

Zum Stand der Technik gehören der Inhalt der folgenden Dokumente:
D1: DE 38 03 636 A (DAIMLER BENZ AG) 6. April 1989 (1989-04-06)
D2: US-A-5 267 385 (KEDA YUZI ET AL) 7.Dezember 1993 (1993-12-07).

D1 bezieht sich auf ein Verfahren zum Aufkleben von Weichstoffauflagen auf räumlich gekrümmte Blechbauteile. Dazu wird ein Roboter eingesetzt, dessen Arm ein Werkzeug 8 trägt. Das Werkzeug ist als Vakuumwerkzeug ausgebildet, wie es auch in der DE-A- 198 12 402 beschrieben ist. Mit Werkzeugen dieser Art können hohe Anpresskräfte auf die aufzuklebende Schicht erzeugt werden, um eine endgültige und dauerhafte Verbindung zwischen der Schicht und dem jeweiligen Karosserieteil sicherzustellen. Vakuumwerkzeuge dieser Art können jeweils nur eine Folie aufnehmen oder ablegen. Die Zuführung der Folien erfolgt beim Gegenstand von D1 über einen Paternoster aus einem unteren Geschoss.

D2 beschreibt die Montage einer Auskleidung des Fahrzeugdaches mit Hilfe eines Roboters. Die Befestigung der Auskleidung erfolgt mechanisch (nicht durch Kleben). Gleichzeitig werden weitere Bauteile wie Rückspiegel, Lampe, Haltegriffe und ein Blendschutz montiert.

Der vorliegenden Erfindung liegt die Aufgabe zugrunde, den mit der Aufbringung von Schichten der beschriebenen Art verbundenen Aufwand zu verringern und die damit verbundenen Nachteile zu vermeiden.

Erfindungsgemäß wird diese Aufgabe durch die kennzeichnenden Merkmale der Patentansprüche gelöst.

Dadurch, dass das Aufbringen der Folien nicht mehr von Hand erfolgt, ist eine wesentliche Quelle für die Entstehung von Staub oder Flusen beseitigt. Zeit- und kostenaufwendige Nacharbeiten an Lackoberflächen entfallen. Weiterhin kann die Ablage der Folien auf die zugehörigen Innenwandabschnitte wesentlich genauer erfolgen, so dass vor allem die gewünschten akustischen Wirkungen zuverlässiger erreicht werden können. Schließlich ist der Einsatz von die Ablage der Folien ausführenden Apparate langfristig kostengünstiger.

Vorteilhaft ist es, dass das Greifgestell für die Folien so ausgebildet ist, dass es mehrere Folien mit unterschiedlichen Eigenschaften (Größe, Aufbau, Formteil usw.) aufnehmen und in der Karosserie ablegen kann. Dadurch wird die Möglichkeit geboten, mit nur einer Apparatur nacheinander alle von einem bestimmten Fahrzeugtyp benötigten Folien erfindungsgemäß aufbringen zu können. In diesem Zusammenhang ist es auch zweckmäßig, wenn sich die benötigten Folien satzweise auf den dem Fließband zugeführten Paletten befinden.

Im übrigen können jedoch je nach Kundenbedarf die verschiedensten Greifeinrichtungen am Kopfteil des Apparates vorgesehen sein, um alle Folien eines bestimmten Fahrzeugtyps applizieren zu können. Reichen die Plätze am Kopfteil des Apparaes nicht aus, ist es zweckmäßig, ein intelligentes Werkzeugwechselsystem vorzusehen, das die Aufnahme aller Hilfseinrichtungen ermöglicht.

Eines der Werkzeuge kann ein Vakuumswerkzeug sein, wie es in der älteren Patentanmeldung 198 12 402.3 beschrieben ist. Es erlaubt zum einen das Aufbringen einer Folie auf eine Unterlage, ohne dabei besondere Kräfte auf die Unterlage ausüben zu müssen. Außerdem kann in einfacher Weise überkopf abgelegt werden, so dass das Vakuumwerkzeug sich besonders für das Aufbringen von Folien auf der Dachinnenseite eignet.

Bestandteile des Greifgestells sind zweckmäßig Träger oder Rahmen, die ihrerseits die eigentlichen Greifelemente tragen. Für Folien mit glatter Außenseite eignen sich insbesondere Sauger mit einem Unterdruckanschluß. Sie werden auf die Folien aufgesetzt und sind nach der Unterdruckerzeugung in der Lage, diese aufzunehmen und während des Transportes zu halten. Das Lösen der Sauger von der Folie erfolgt durch Belüften der Saugerinnenräume.

Bei mit Magnetpulver gefüllten Folien können Magnete als Greifelemente eingesetzt werden. Sie sind zweckmäßig als umpolbare Elektromagneten ausgebildet, damit das Lösen der Folien von diesen Greifelementen in einfacher Weise durchgeführt werden kann.

Beim Verarbeiten der üblichen, im wesentlichen ebenen, Folien sind die Greifelememente ebenfalls in einer Ebene am Träger oder Rahmen des Greifgestells aungeordnet. Bei vorgeformten Folien ist der zugehörige Rahmen mit seinen Geifelementen zweckmäßig dieser Form aungepaßt. Eine weitere Möglichkeit besteht darin, einen Rahmen zu verwenden, der mit einem schwenkbaren Abschnitt ausgerüstet ist. Dieser kann bei der Aufnahme der Folie ihrer Form angepaßt werden. Außerdem besteht die Möglichkeit, von der Verschwenkung während der Ablage der Folie Gebrauch zu machen, um eine vollflächige Auflage sicher zu stellen.

Weitere Vorteile und Einzelheiten der Erfindung sollen anhand von in den Figuren 1 bis 12 schematisch dargestellten Ausführungsbeispielen erläutert werden. Es zeigen
- Figur 1 eine Fahrzeugkarosserie, den dem Ablegen der Folien dienenden Apparat und die Endstation eines der Zuführung der Folien dienenden Shuttle-Systems, jeweils in seitlicher Ansicht,
- Figur 2 die Beladestation des Shuttle-Systems und einen Teil der Schienenverbindung zur Endstation,
- Figuren 3a, b und c die Einrichtung nach Figur 1 in einer Sicht parallel zum ,Fließband,
- Figur 4 eine Draufsicht auf eine mit Folien bestückte Palette,
- Figuren 5 und 6 Phasen einer Folienablage durch die Hecköffnung der Rohkarosserie,
- Figuren 7 und 8 Phasen einer Folienablage durch die Frontscheibenöffnung der Rohkarosserie,
- Figuren 9 und 10 das Aufbringen von Folien mit Hilfe eines Vakuumwerkzeuges,
- Figuren 11a und b ein modifiziertes Greifgestell für Formteile und
- Figur 12 das Aufbringen einer Beschichtung durch Spritzen.

In den Figuren sind die Rohkarosserie jeweils mit 1, der der Ablage der Folien dienende Apparat mit 2 und die Endstation eines Folienzuführsystems 3 mit 4 bezeichnet. Die Rohkarosserie 1 befindet sich auf dem Fließ- oder Transportband 5. Zur Ablage der Folien hält sie zeitweise an. Der Apparat 2 umfaßt ein Basisteil 7, in dem sich Steuer- und Energieversorgungsmittel befinden. Am Basisteil 7, das beim dargestellten Ausführungsbeispiel über dem Fließband 5 -zweckmäßig verschiebbar- aufgehängt ist, ist ein mehrgliedriger Arm 8 befestigt, dessen freies Ende ein Kopfteil 9 trägt. Das Kopfteil 9 seinerseits trägt ein oder mehrere Greifgestelle 11, die im weiteren noch genauer beschrieben werden. Die Glieder des Armes 8, Kopfteil 9 und Greifgestell 11 sind relativ zueinander beweg- und feststellbar. Auch die Greifgestelle 11 ihrerseits können Stellantriebe umfassen, die eine Drehung, Verschwenkung, Verschiebung oder dergleichen, einer oder mehrerer daran befestigter Greifer gestatten.

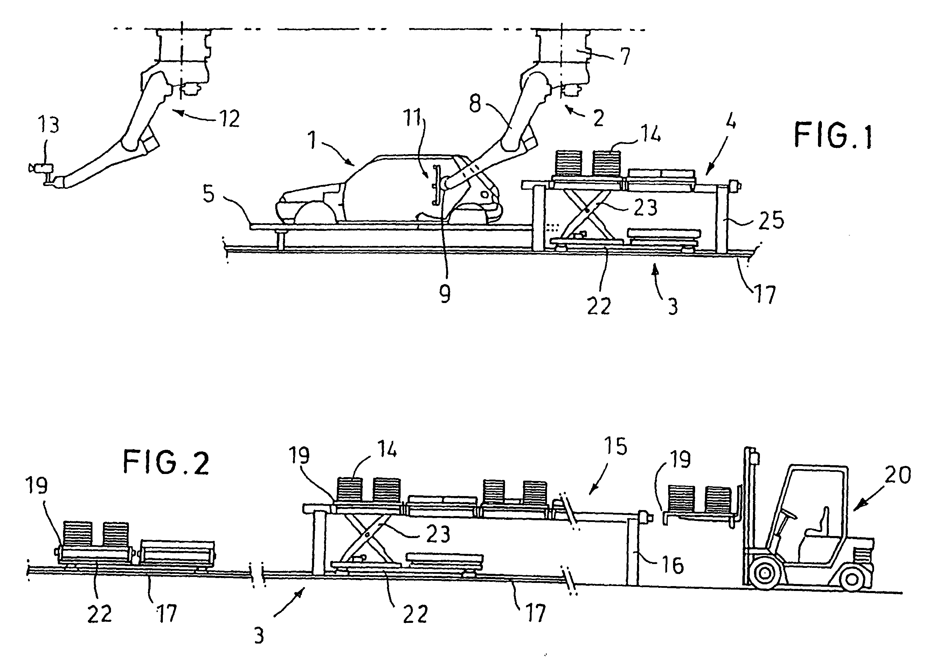

In Figur 1 ist ein weiterer über dem Fließband 5 aufgehängter, dem Apparat 2 ähnlicher Apparat 12 dargestellt, dessen Kopfteil eine Kamera 13 trägt. Mit Hilfe der Kamera 13 kann das Innere einer Rohkarosserie 1 mit ihren Ablageorten für die Folien ausgemessen werden. Die in dieser Weise gewonnenen Daten (Solldaten) dienen dazu, den der Ablage der Folien dienenden Apparat 2 zu steuern. Die Anordnung der Kamera 13 über dem Fließband 5 erlaubt weitere Steuerungs- und/oder Kontrollschritte. Beispielsweise kann die Kamera 13 die Position einer Folie 14 am Greifer erfassen und den Apparat 2 in Abhängigkeit von der Folienposition steuern. Befindet sich die Kamera hinter dem Ort der Ablage der Folien 14 (in Bewegungsrichtung des Fließbandes 5 gesehen) besteht die Möglichkeit, die Positionsgenauigkeit der Ablage der Folien nachträglich zu kontrollieren, indem die nach der Ablage der Folien 14 von der Kamera 13 aufgenommenen Meßdaten mit den Solldaten verglichen werden. Korrekturschritte können danach eingeleitet werden. Schließlich kann die Kamera 13 auch am Kopfteil 9 des Apparates 2 angeordnet sein und von dort aus unmittelbar den Ablagevorgang steuern.

Die Figuren 1 bis 3 lassen das Shuttle-System 3 erkennen, das der Zuführung der generell mit 14 bezeichneten Folien dient. Es umfaßt die Beladestation 15, die aus einem langgestreckt rechteckförmigen Gestell 16 besteht, in dem bodenseitig ein Schienenstrang 17 endet. Die Oberseite des Gestells 16 erlaubt nach der Betätigung von Verriegelungen das Abstellen von Paletten 19, zum Beispiel durch den Stapler 20. Auf dem Schienenstrang 17 ist ein Transportwagen 22 mit Hubtischen 23 verschiebar. Diese erlauben es, auf der Oberseite des Gestells 16 abgestellte Paletten nach dem Lösen der Verriegelungen abzunehmen und auf den Transportwagen 22 abzusenken. Danach erfolgt der Transport der Paletten 19 zur Endstation 4 (Figur 1), die ebenfalls ein langgestreckt rechteckförmiges Gestell 25 umfaßt. Mit Hilfe der Hubtische 23 werden volle Paletten 19 auf der Oberseite des Gestells 25 abgestellt und leere Paletten 19 abgenommen. Diese werden zur Beladestation 15 zurück transportiert. Vorteilhaft am Shuttle-System 3 ist, daß Bereiche an den Montagebändern erreicht werden können, die für den Staplerverkehr nicht zugänglich sind.

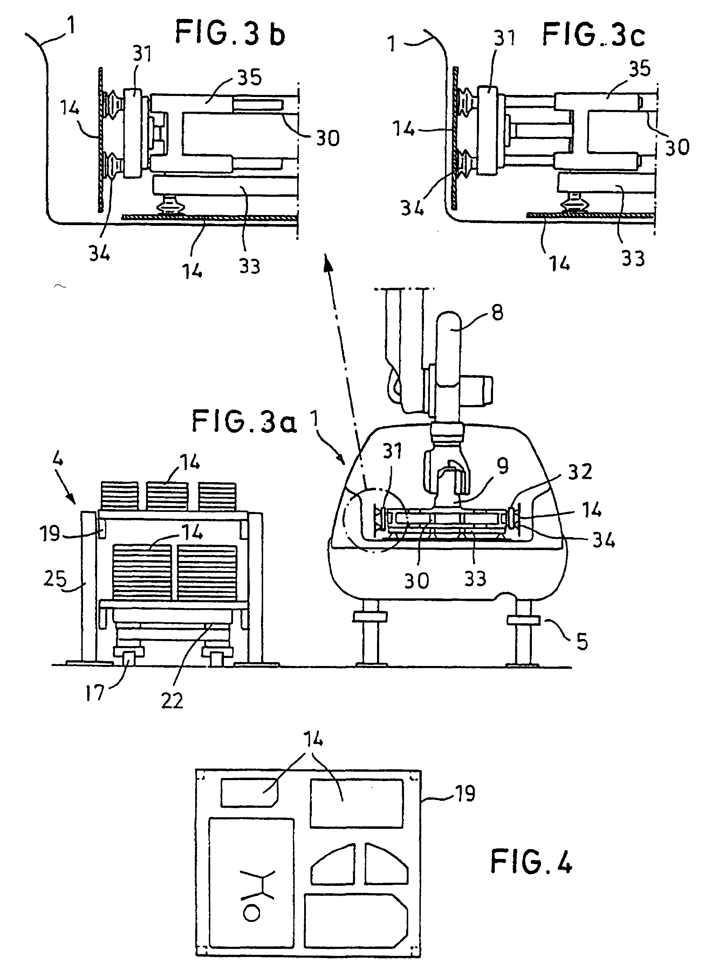

Figur 4 zeigt eine Draufsicht auf eine Palette 19. Es ist ersichtlich, dass sie satzweise mit Folien 14 beladen ist. Die auf der Palette 19 befindlichen Folien 14 haben unterschiedliche Größen und - wenn unterschiedliche akustische Wirkungen erzielt werden sollen - auch einen unterschiedlichen Aufbau. Bei entsprechender Ausbildung des Greifgestells 11 können mehrere, zum Beispiel zwei bis fünf, der Folien von der Palette 19 abgenommen und in einem Arbeitsgang nacheinander in der Rohkarosserie 1 abgelegt werden.

Figur 3 läßt erkennen, dass das Greifgestell 11 einen Träger 30 umfaßt, der sich in der Figur quer zur Mittelebene der Karosserie 1 erstreckt. Er trägt seitlich die Rahmen 31, 32 und bodenseitig den Rahmen 33. Die Rahmen 31, 32, 33 sind mit Greifelementen 34 ausgerüstet, die unmittelbar dem Ergreifen, halten und Ablegen von Folien 14 dienen.

Die in den Figuren 3a, 3b und 3c dargestellte Lösung erlaubt die Ablage von Folien 14 im Bodenbereich und auf den hinteren Radkästen der Karosserie 1. Mit Hilfe des Greifgestells 11, das unter anderem drehbar am Kopfteil des Armes 8 gehaltert, und der Greifelemente 34 werden die für den Boden und für die Radkästen vorgesehenen Folien 14 von der Palette 19 abgenommen und durch eine hintere Öffnung (z. B. Heckscheibenöffnung) in die Karosserie 1 transportiert. Nach dem Absenken des Trägers 30 bis in den Bodenbereich, erfolgt die Ablage der bodenseitigen Folie 14. Die Rahmen 31 und 32 sind mit Hilfe von Antrieben 35 in seitlicher Richtung verschiebbar am Träger angeordnet. Als Antriebe können Hydraulikzylinder, Stellmotoren oder ähnliche Stelleinrichtungen eingesetzt werden. Zur Ablage der Folien 14 auf die Radkästen werden die Rahmen so weit nach außen verschoben, bis die Folien 14 den Radkästen aufliegen (vgl. Darstellungen 3b und 3c). Danach erfolgt das Lösen der Greifelemente 34. Bei einer anderen - nicht dargestellten - Lösung könnte der Träger 30 insgesamt seitlich verschiebbar am Kopfteil 9 befestigt sein. Nach dem Absenken des Trägers 30 bis zur Höhe der Radkästen erfolgt dann das Ablegen der Folien 14 nacheinander.

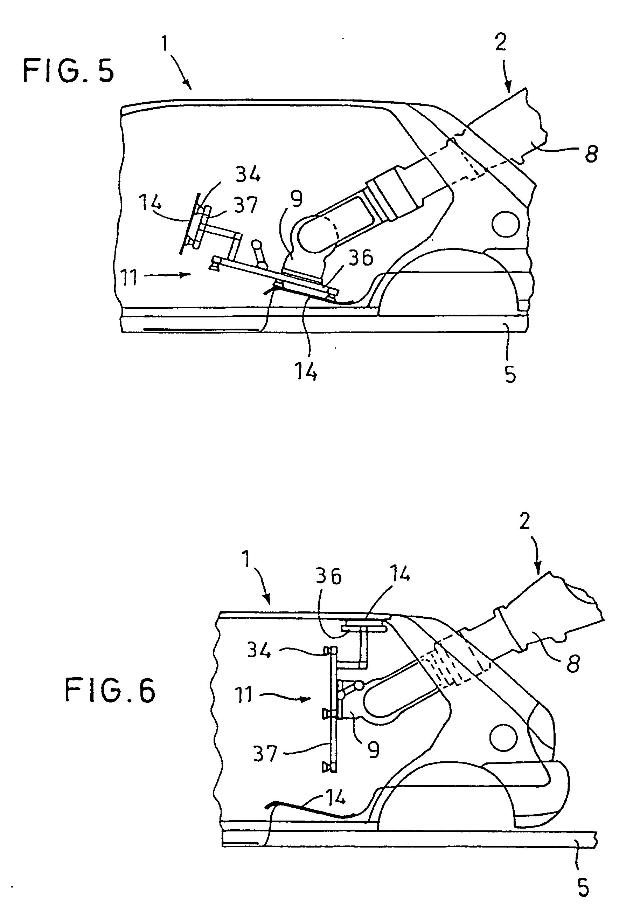

Die Figuren 5 und 6 zeigen das Greifgestell 11, bei dem die Greifelemente 34 an zwei Rahmen 36, 37 befestigt sind, die im Bereich der Mittelebene der Fahrzeugkarosserie 1 bewegt werden. Die Ebenen der Rahmen 36, 37 bilden einen Winkel von etwa 90°. Mit Hilfe des Greifgestells 11 und der Greifer 34 sind außerhalb der Karosse unterschiedlich große Folien 14 aufgenommen und mittels des Armes 8 in die Karosserie 1 überführt worden. Die vom Rahmen 36 aufgenommene Folie 14 wird auf der Sitzbank abgelegt. Danach erfolgt - nach einer entsprechenden Drehung des Gestells 11 um eine zur Mittelebene der Karosserie 1 senkrechte Achse - das Aufbringen der vom Rahmen 37 aufgenommenen Folie 14 auf die Innenseite der Dachfläche (Figur 6).

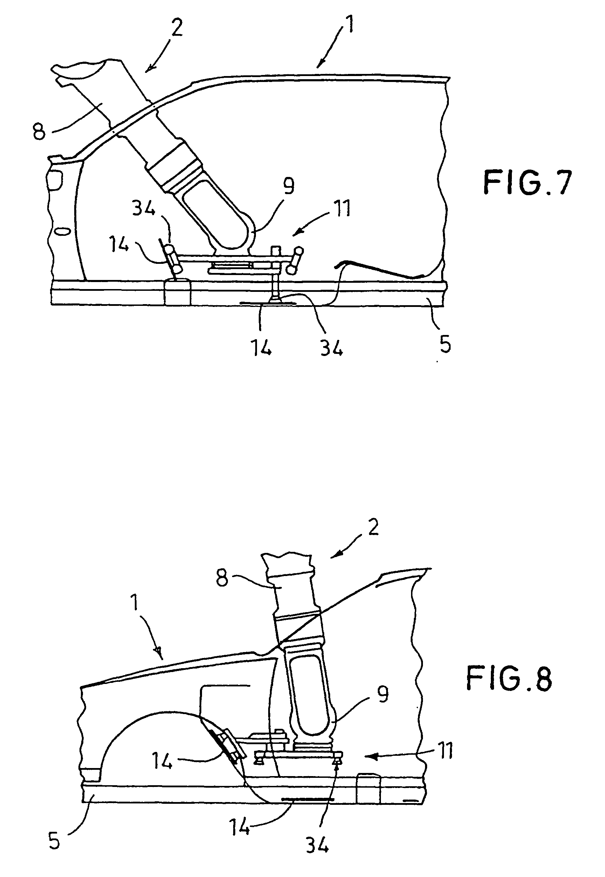

Die Figuren 7 und 8 lassen die Ablage von Folien 14 im vorderen Bodenbereich und auf der Stirnwand erkennen und zwar durch die Frontscheibenöffnung der Karosserie 1. Der Ablauf des Ablageverfahrens entspricht dem zu den Figuren 5 und 6 beschriebenen Ablageverfahren.

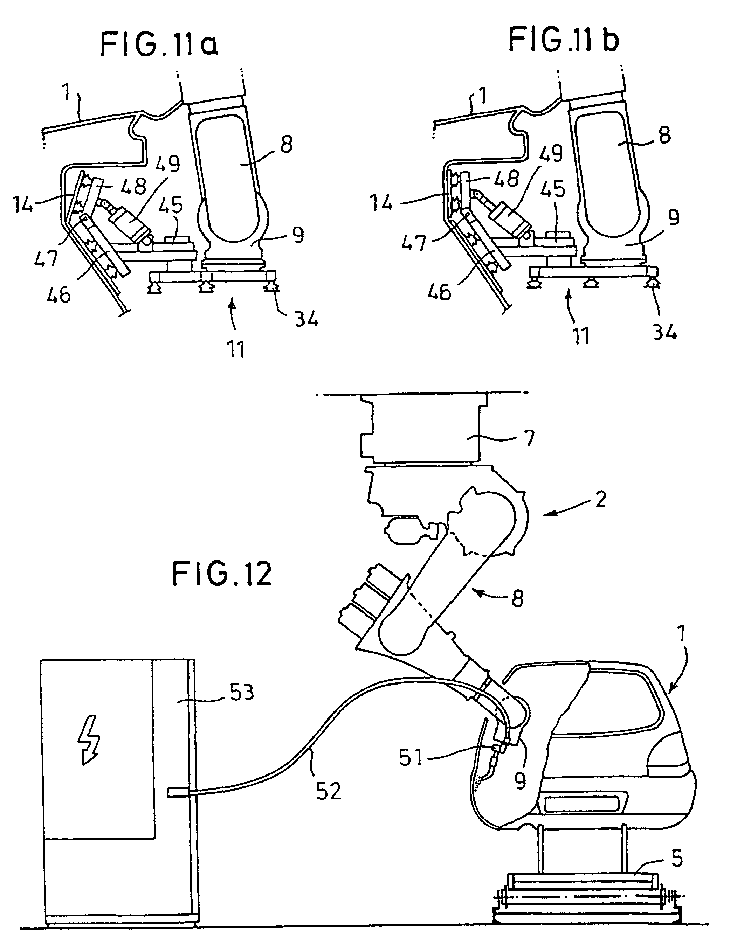

Auf die Gestaltung eines mit Greifelementen 34 ausgerüsteten, der Ablage von Folien-Formteilen 14 für die Stirnwand des Fahrzeuges geeigneten Rahmens wird im Zusammenhang mit dem in Figur 11 beschriebenen Ausführungsbeispiels noch eingegangen.

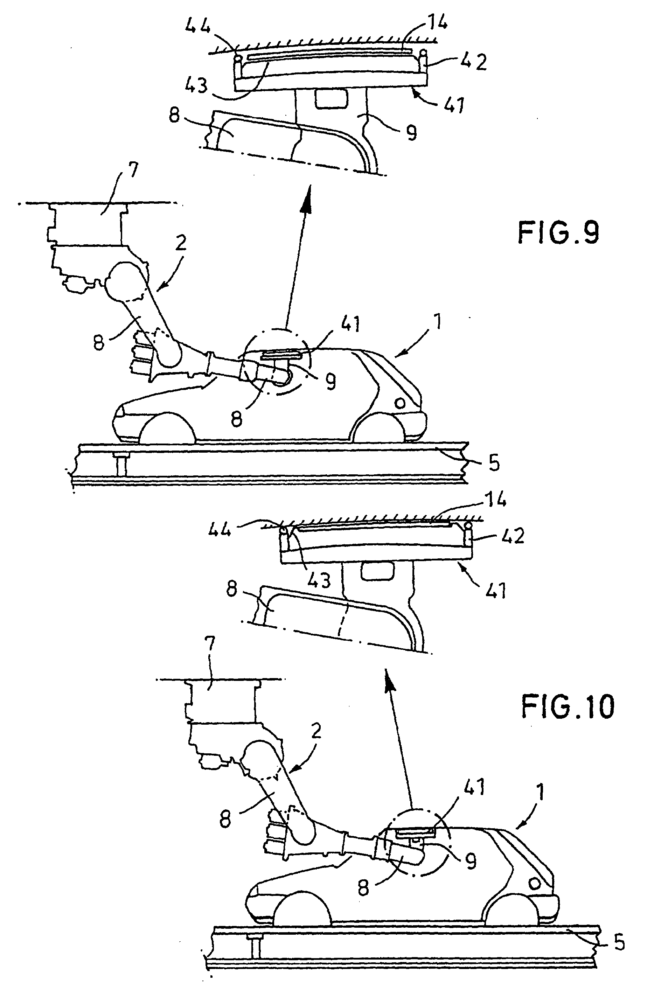

Bei der in den Figuren 9 und 10 dargestellten Lösung erfolgt die Ablage der für den Dachbereich notwendigen Folie 14, die überkopf aufgebracht werden muss, mit Hilfe eines Vakuumwerkzeugs 41. Bei diesem Vakuumwerkzeug 41 (vgl. insbesondere die jeweils zu den Figuren 9 und 10 gehörenden Teilvergrößerungen) handelt es sich um eine Vorrichtung zum Aufbringen einer Folie 14 auf ein Bauteil mit einer von einem geschlossenen Rahmen 42 eingefassten, flexible Membran 43 zum Halten der Folie 14. Der Rahmen 42 weist an seiner vorderen, bei Benutzung der Vorrichtung dem Bauteil zugewandten Seite eine umlaufende, elastische Dichtung 44 auf. Mittels eines nicht dargestellten Unterdruckanschlusses kann der Raum zwischen der Membran 43 und dem Bauteil evakuiert werden. Dadurch legt sich die Folie 14 gegen das Bauteil, in diesem Fall die Innenseite des Daches, an.

Mit Hilfe des am Kopfteil 9 insbesondere um eine zur Mittelebene des Fahrzeugs senkrechte Achse drehbar befestigten Vakuumwerkzeuges 41 wird außerhalb der Fahrzeugkarosserie 1 die gewünschte Folie 14 aufgenommen und danach durch die Frontscheibenöffnung in das Innere des Fahrzeugs 1 transportiert. Nach der Ausrichtung der Folie 14 in Richtung Ablageort (Figur 9) erfolgt die Anlage der Dichtung 44 und das Evakuieren des Zwischenraumes. Dadurch legt sich die Folie der Dachinnenseite an (Figur 10). Danach wird der Raum zwischen Membran 43 und Dachinnenseite belüftet, so dass das Vakuumwerkzeug 41 entfernt werden kann.

Die Figuren 11a und 11b zeigen einen Teil des Gestells 11, zu dem ein Rahmen 46 gehört, der dem Aufbringen von vor ihrer Ablage verformten oder zu verformenden Folien 14, zum Beispiel Alumininium-Sandwichfolien für die Fahrzeugstimwand, dient. Der am Kopfteil 9 über den Träger 45 befestigte Rahmen 46 weist einen um die Achse 47 schwenkbaren Abschnitt 48 auf. Der Verschwenkung dient ein Stellzylinder 49, der am Träger 45 und am schwenkbaren Abschnitt 48 angreift. Der Rahmen 46 erlaubt es, bereits verformte Folien 14 sicher zu ergreifen. Außerdem kann der dem schwenkbaren Abschnitt 48 anliegende Teil der Folie 14 gesondert auf seine Unterlage gedrückt werden, um die gewünschte vollflächige Anlage sicher zu erreichen.

Das Ausführungsbeispiel nach Figur 12 betrifft das Aufbringen von Beschichtungen durch Spritzen. Am Kopfteil 9 des Apparates 2 ist eine Spritzpistole 51 befestigt, die über eine flexible Leitung 52 mit einem Versorgungsgerät 53 in Verbindung steht. Mit Hilfe des Apparates 2 wird die Spritzpistole 51 zum Beispiel - wie dargestellt - durch eine Seitenfensteröffnung in das Innere der Karosserie 1 eingeführt und auf den zu beschichtenden Bereich ausgerichtet. Das Betätigen der Spritzpistole 51 und - falls nötig - deren Spritzbewegungen werden vom Apparat 2 automatisch ausgeführt. Nach der Beendigung des Beschichtungsvorgangs erfolgt die Entfernung der Spritzpistole 51 aus dem Innenraum der Karosserie 1.

## Patentansprüche

1. Verfahren zum Aufbringen von Schichten auf Wandabschnitte einer Rohkarosserie (1) im Zuge einer Fließbandproduktion, bei welchem Folien (14) auf Paletten (19) dem Fließband (5) zugeführt werden, die Folien (14) von den Paletten (19) abgenommen und selbsthaftend auf die Wandabschnitte abgelegt werden und bei welchem die Karosserie (1) nach diesem Schritt der vorläufigen Ablage der Folien (14) durch einen Ofen hindurch geführt wird, in dem durch die Wärmeeinwirkung das eigentliche Aufbringen der Folien (14) durch Aufschmelzen auf ihre jeweilige Unterlage erfolgt, **dadurch gekennzeichnet, dass** zum Abnehmen der Folien (14) von ihrer Palette (19) und zum Ablegen der Folien (14) auf die Wandabschnitte der Karosserie (1) ein Apparat (2) mit einem mehrgliedrigen Arm (8) und einem daran beweglich gehalterten, für die Aufnahme und Ablage mehrerer Folien geeignet ausgebildeten Greifgestell (11) verwendet wird, indem mit Hilfe des Greifgestells (11) mehrere Folien (14) außerhalb der Karosserie (1) aufgenommen werden und danach die Folien zusammen mit dem Greifgestell (11) mit Hilfe des Armes (8) in einem Arbeitsgang durch eine Öffnung der Karosserie (1) zum Ablageort transportiert und dort abgelegt werden.

2. Verfahren nach Anspruch 1, **dadurch gekennzeichnet, dass** mehrere Folien (14) mit unterschiedlichen Eigenschaften (Größe, Aufbau, Formteil o.dgl.) vom Greifgestell (11) aufgenommen und auf die jeweils betroffenen Innenwandabschnitte abgelegt werden.

3. Verfahren nach Anspruch 1 oder 2, **dadurch gekennzeichnet, dass** die Ablageorte für die Folien (14) vorab mit Hilfe einer Kamera (13) vermessen werden und dass mit Hilfe der aufgenommenen Messdaten der der Aufnahme, dem Transport und der Ablage der Folien (14) dienende Apparat (2) gesteuert wird.

4. Verfahren nach Ansprüchen 1, 2 oder 3, **dadurch gekennzeichnet, dass** die Position der Folien (14) nach ihrer Ablage mit Hilfe einer Kamera (13) kontrolliert wird, indem diese Kamera nach der Ablage der Folien (14) mit Hilfe einer weiteren Apparatur (12) in das Innere der Karosserie (1) eingeführt wird, dort die Position der abgelegten Folien (14) vermißt und danach die gemessenen Daten mit den Solldaten verglichen werden.

5. Verfahren nach einem der vorhergehenden Ansprüche, **dadurch gekennzeichnet, dass** das Aufnehmen und Ablegen der Folien (14) mit Hilfe von am Greifgestell (11) angeordneten Greifelementen (34) durchgeführt wird und dass als Greifelemente (34) Sauger oder Magneten verwendet werden.

6. Verfahren nach einem der vorhergehenden Ansprüche, **dadurch gekennzeichnet, dass** für die Zufuhr von mit Folien (14) bestückten Paletten (19) und für die Abfuhr leerer Paletten (19) ein Shuttle-System (3) verwendet wird, dessen Bestandteile eine Beladestation (15), eine Endstation (4) und ein die Stationen (15, 4) verbindender Schienenstrang (17) sind.

7. Verfahren nach einem der vorhergehenden Ansprüche, **dadurch gekennzeichnet, dass** dem der Aufnahme und Ablage der Folien (14) dienenden Apparat (2) satzweise mit Folien (14) bestückte Paletten (19) zugeführt werden.

8. Verfahren nach Anspruch 7, **dadurch gekennzeichnet, dass** ein Greifgestell (11) verwendet wird, mit dem alle Folien (14) einer oder mehrerer, satzweise bestückten Paletten (19) aufgenommen und auf die zugehörigen Innenwandabschnitte der Karosserie (1) abgelegt werden können.

9. Vorrichtung zur Durchführung eines Verfahrens zum Aufbringen von Folien (14) mit akustischer und/oder versteifender Wirkung auf Wandabschnitte einer Rohkarosserie (1) im Zuge einer Fließbandproduktion, bei welchem die Folien (14) auf Paletten (19) dem Fließband (5) zugeführt werden, die Folien (14) von den Paletten ( 19) abgenommen und selbsthaftend auf die Wandabschnitte abgelegt werden, bei welchem die Karosserie (1) nach diesem Schritt durch einen Ofen hindurchgeführt wird, in dem durch die Wärmeeinwirkung ein Aufschmelzen der Schichten auf ihre jeweiligen Unterlage bewirkt wird, und bei welchem zum Abnehmen der Folien (14) von ihrer Palette (19) und zum Ablegen der Folien (14) auf die Wandabschnitte der Karosserie (1) ein Apparat (2) mit einem mehrgliedrigen Arm (8) und einem daran beweglich gehalterten Kopfteil (9) verwendet wird,
**dadurch gekennzeichnet,**
**dass** Bestandteil des Apparates (2) ein Basisteil (7) mit Steuer- und Versorgungseinrichtungen ist, an dem der mehrgliedrige Arm (8) mit seinem Kopfteil (9) befestigt ist, und dass das Kopfteil (9) ein Greifgestell (11) trägt, das der Aufnahme und Ablage mehrerer Folien (14) in einem Arbeitsgang dient,

10. Vorrichtung nach Anspruch 9, **dadurch gekennzeichnet, dass** Bestandteile des Greifgestells (11) Träger (30, 45) für mehrere Rahmen (31, 32, 33, 36, 37, 46, 47) mit Greifelementen (34) sind.

11. Vorrichtung nach Anspruch 9 oder 10, **dadurch gekennzeichnet, dass** als Greifelemente (34) Sauger oder Magneten vorgesehen sind.

12. Vorrichtung nach Anspruch 10 oder 11, **dadurch gekennzeichnet, dass** die Rahmen (31, 32, 33, 36, 37, 46, 47) ihrerseits verstellbar sind.

13. Vorrichtung nach Anspruch 10, 11 oder 12, **dadurch gekennzeichnet, dass** ein Rahmen (46) mit einem verschwenkbaren Abschnitt (48) ausgerüstet ist.

14. Vorrichtung nach einem der Ansprüche 10 bis 13, **dadurch gekennzeichnet, dass** mehrere Rahmen (31, 32, 33, 36, 37, 46, 47) für Folien (14) mit unterschiedlichen Eigenschaften in Bezug auf Größe, Aufbau oder Form o.dgl. Bestandteile des Greifgestells (11) sind.

15. Vorrichtung nach einem der vorhergehenden Ansprüche, **dadurch gekennzeichnet, dass** am Kopfteil (9) des Apparates (2) eine Kamera (13) angeordnet ist.

16. Vorrichtung nach einem der Ansprüche 9 bis 15, **dadurch gekennzeichnet, dass** ein weiterer Bestandteil ein zweiter mehrgliedriger Arm (12) ist, dessen Kopfteil eine Kamera (13) trägt.

17. Vorrichtung nach einem der Ansprüche 9 bis 16, **dadurch gekennzeichnet, dass** die der Zuführung der Folien (14) dienende Einrichtung als Shuttle-System (3) mit einer Beladestation ( 15), einer Endstation (4) und einem die Stationen (15, 4) verbindenden Schienenstrang (17) ausgebildet ist.

18. Vorrichtung nach Anspruch 17, **dadurch gekennzeichnet, dass** die Beladestation (15) und die Endstation (4) jeweils aus einem langgestreckt rechteckförmigen Gestell (16, 25) bestehen, in denen der Schienenstrang (17) jeweils bodenseitig endet, und dass ein auf dem Schienenstrang (17) verfahrbarer Transportwagen (22) mit mindestens einem Hubtisch (23) vorgesehen ist.

## Claims

1. Procedure for applying material layers onto wall sections of a bodywork (1) in the course of assembly line production, whereby foil sheets (14) are supplied to the assembly line (5) on pallets (19) and said foil sheets (14) are removed from the pallets (19) and self-adhesively placed onto the wall sections and whereby said procedure then, after this provisional placement step of the foil sheets (14), includes moving the bodywork (1) through an oven wherein the heat effects the final placement of the foil sheets (14) by bond melting them to the respective support surfaces, said procedure **characterized by**:
the pick up of the foil sheets (14) from their pallet (19) and the placement of the foil sheets (14) onto the wall sections of the bodywork (1) being accomplished by an apparatus (2) consisting of a multi-sectioned arm (8) to which a pick-up rack (11) designed for the pick up and placement of various foil sheets (14) is attached, and said handling device being able to use the pick-up rack (11) to pick up the foil sheets (14) outside of the bodywork (1) and, with the aid of the arm (8), to transfer the foil sheets in a single procedural step through an opening in the bodywork (1) and onto the placement location.

2. The procedure in accordance with the preceding claim 1, further **characterized by**:
the pick-up rack (11) being able to pick up a number of foil sheets (14) having different characteristics (size, structure, molded shape, or the like) and placing them onto the respective inner wall sections.

3. The procedure in accordance with any one of preceding claims 1 or 2, further **characterized by**:
the placement locations for the foil sheets (14) first being surveyed by a camera (13) and the resulting measurement data being used to control the handling device (2) performing the pick-up, transfer and placement of the foil sheets (14).

4. The procedure in accordance with any one of preceding claims 1, 2 or 3, further **characterized by**:
the placement position of the foil sheets (14) being checked with the help of a camera (13), said camera, after placement of the foil sheets, being moved by a second apparatus (12) into the interior of the bodywork (1), and the measurement data of the placement location thus determined being compared to the required design data.

5. The procedure in accordance with any one of the preceding claims, further **characterized by**:
the pick up and placement of the foil sheets (14) being performed by pick-up elements (34) attached to the pick-up rack (11), said pick-up elements (34) being suction cups or magnets.

6. The procedure in accordance with any of the preceding claims further **characterized by**:
the supply of pallets (19) stocked with foil sheets (14) and the removal of empty pallets (19) being effected by a shuttle system (3) that includes a loading station (15), a terminal station (4) and a line of rails (17) connecting these stations (15, 4).

7. The procedure in accordance with any of the preceding claims, further **characterized by**:
the apparatus (2) performing the pick up and placement of the foil sheets (14) being supplied from pallets (19) stocked with sets of foil sheets (14).

8. The procedure in accordance with the preceding claim 7, further **characterized by**:
a pick-up rack (11) being used with which all sets of foil sheets (14) of one or more pallets (19) can be picked up and placed onto the respective inner wall sections of the bodywork (1).

9. Equipment for executing a procedure for the placement of foil sheets (14) having acoustic and/or stabilizing effects onto wall sections of a bodywork (1) in the course of assembly line production, whereby the foil sheets (14) are supplied to the assembly line (5) on pallets (19) and said foil sheets (14) are removed from the pallets (19) and self-adhesively placed onto the wall sections and whereby said procedure then, after this provisional placement step of the foil sheets (14), includes moving the bodywork (1) through an oven wherein the heat effects the final placement of the foil sheets (14) by bond melting them to the respective support surfaces, whereby said equipment is equipped with an apparatus (2) for picking up the foil sheets (14) from their pallet (19) and placing the foil sheets (14) onto the wall sections of the bodywork (1), whereby said handling device (2) is equipped with a multi-sectioned arm (8) and a head structure (9) moveably mounted to the arm, and said equipment is further **characterized by**:
a base station (7) with control and supply facilities being an attached part of said apparatus (2) to which the multi-sectioned arm (8) with the attached head structure (9) is mounted, and
said head structure (9) carrying a pick-up rack (11) that effects the pick up and placement of various foil sheets (14) in a single procedural step.

10. The equipment in accordance with the preceding claim 9, further **characterized by**:
the pick-up rack (11) comprising carriers (30, 45) for various support frames (31, 32, 33, 36, 37, 46, 47) equipped with pick-up elements (34),

11. The equipment in accordance with any one of preceding claims 9 or 10, further **characterized by**:
the pick-up elements (34) being suction cups or magnets.

12. The equipment in accordance with any one of preceding claims 10 or 11, further **characterized by**:
the support frames (31, 32, 33, 36, 37, 46, 47) being themselves adjustable.

13. The equipment in accordance with any one of preceding claims 10, 11 or 12, further **characterized by**:
one support frame (46) being equipped with a swivel-mounted section (48).

14. The equipment in accordance with any one of preceding claims 10 through 13, further **characterized by**:
the pick-up rack (11) comprising various support frames (31, 32, 33, 36, 37, 46, 47) for foil sheets (14) with different characteristics regarding size, design, shape or the like.

15. The equipment in accordance with any of the preceding claims further **characterized by**:
a camera (13) being attached to the head structure (9) of the handling device (2).

16. The equipment in accordance with any of preceding claims 9 through 15, further **characterized by**:
a second multi-sectioned arm (12) the head structure of which carries a camera (13) being an additional component part.

17. The device in accordance with any of preceding claims 9 through 16, further **characterized by**:
the facility supplying the foil sheets (14) being designed as a shuttle system (3) comprised of a loading station (15), a terminal station (4) and a line of rails (17) connecting these stations (15, 4).

18. The device in accordance with the preceding claim 17, further **characterized by**:
the loading station (15) and the terminal station (4) being designed as elongated rectangular trestles (16, 25), the base of which being the end points of the line of rails (17), and a transport cart (22) that is moveable on this line of rails (17) being equipped with at least one lifting platform (23).

## Revendications

1. Procédé d'application de couches sur des parties de paroi d'une carrosserie brute (1) dans le cadre d'une production à la chaîne, dans lequel des feuilles (14) sont amenées à la chaîne (5) sur des palettes (19), les feuilles (14) sont ôtées des palettes (19) et déposées de manière autocollante sur les parties de paroi, et dans lequel la carrosserie (1), après cette étape de dépôt provisoire des feuilles (14), est conduite à travers un four dans lequel est réalisée l'application proprement dite des feuilles (14) sous l'effet de la chaleur par fusion sur leur support respectif, **caractérisé en ce que** pour ôter les feuilles (14) de leur palette (19) et pour déposer les feuilles (14) sur les parties de paroi de la carrosserie (1) on utilise un appareil (2) avec un bras (8) à plusieurs articulations et un dispositif de préhension (11) retenu de manière mobile à ce dernier et configuré pour saisir et déposer plusieurs feuilles, le dispositif de préhension (11) saisissant plusieurs feuilles (14) à l'extérieur de la carrosserie (1) et les feuilles, conjointement avec le dispositif de préhension (11), étant ensuite transportées vers le lieu de dépôt et déposées à cet endroit à l'aide du bras (8), en une seule opération, à travers une ouverture de la carrosserie (1).

2. Procédé selon la revendication 1, **caractérisé en ce que** plusieurs feuilles (14) présentant des propriétés différentes (taille, structure, forme ou similaires) sont saisies par le dispositif de préhension (11) et déposées sur les parties de paroi intérieure respectivement concernées.

3. Procédé selon la revendication 1 ou 2, **caractérisé en que** les lieux de dépôt pour les feuilles (14) sont préalablement mesurés à l'aide d'une caméra (13), et en ce qu'à l'aide des données de mesures enregistrées, on commande l'appareil (2) servant à saisir, à transporter et à déposer les feuilles (14).

4. Procédé selon les revendications 1, 2, ou 3, **caractérisé en ce que** la position des feuilles (14) après leur dépôt est contrôlée à l'aide d'une caméra (13), cette caméra étant introduite, après le dépôt des feuilles (14), à l'intérieur de la carrosserie (1) à l'aide d'un autre appareil (12), et mesure ici la position des feuilles (14) déposées, les données mesurées étant ensuite comparées avec les données de consigne.

5. Procédé selon l'une quelconque des revendications précédentes, **caractérisé en ce que** la saisie et le dépôt des feuilles (14) sont réalisés à l'aide d'éléments de préhension (34) disposés sur le dispositif de préhension (11), et **en ce qu'**on utilise des ventouses ou des aimants comme éléments de préhension (34).

6. Procédé selon l'une quelconque des revendications précédentes, **caractérisé en ce que** pour amener des palettes (19) chargées de feuilles (14) et pour évacuer des palettes (19) vides, on utilise un système de transfert (3) composé d'une station de chargement (15), d'une station terminale (4) et d'une file de rails (17) reliant les stations (15, 4).

7. Procédé selon l'une quelconque des revendications précédentes, **caractérisé en ce que** l'appareil (2) servant à saisir et à déposer les feuilles (14) reçoit des palettes (19) chargées de feuilles (14) par lots.

8. Procédé selon la revendication 7, **caractérisé en ce que** l'on utilise un dispositif de préhension (11) permettant de saisir toutes les feuilles (14) d'une ou de plusieurs palettes (19) chargées par lots et de les déposer sur les parties de paroi intérieure correspondantes de la carrosserie (1).

9. Dispositif pour la mise en oeuvre d'un procédé d'application de feuilles (14) à effet acoustique et/ou raidisseur sur des parties de paroi d'une carrosserie brute (1) dans le cadre d'une production à la chaîne, dans lequel les feuilles (14) sont amenées à la chaîne (5) sur des palettes (19), les feuilles (14) sont ôtées des palettes (19) et déposées de manière autocollante sur les parties de paroi, et dans lequel la carrosserie (1), après cette étape, est conduite à travers un four dans lequel est réalisée sous l'effet de la chaleur une fusion des couches sur leur support respectif, et dans lequel on utilise, pour ôter les feuilles (14) de leur palette (19) et pour déposer les feuilles (14) sur les parties de paroi de la carrosserie (1), un appareil présentant un bras (8) à plusieurs articulations et un élément de tête (9) retenu de manière mobile sur celui-ci,
**caractérisé en ce que**
l'appareil (2) comprend un élément de base (7) avec des installations de commande et d'alimentation, auquel est fixé le bras (8) à plusieurs articulations muni de son élément de tête (9), et **en ce que** l'élément de tête (9) porte un dispositif de préhension (11) servant à saisir et déposer plusieurs feuilles (14) en une seule opération.

10. Dispositif selon la revendication 9, **caractérisé en ce que** le dispositif de préhension (11) comprend des supports (30, 45) pour plusieurs cadres (31, 32, 33, 36, 37, 46, 47) avec des éléments de préhension (34).

11. Dispositif selon la revendication 9 ou 10, **caractérisé en ce que** des ventouses ou des aimants sont prévus comme éléments de préhension (34).

12. Dispositif selon la revendication 10 ou 11, **caractérisé en ce que** les cadres (31, 32, 33, 36, 37, 46, 47) sont respectivement réglables.

13. Dispositif selon la revendication 10, 11 ou 12, **caractérisé en ce qu'**un cadre (46) est muni d'une portion pivotante (48).

14. Dispositif selon l'une quelconque des revendications 10 à 13, **caractérisé en ce que** le dispositif de préhension (11) comprend plusieurs cadres (31, 32, 33, 36, 37, 46, 47) pour des feuilles (14) présentant des propriétés différentes concernant la taille, la structure, la forme ou similaires.

15. Dispositif selon l'une quelconque des revendications précédentes, **caractérisé en ce qu'**une caméra (13) est disposée au niveau de l'élément de tête (9) de l'appareil (2).

16. Dispositif selon l'une quelconque des revendications 9 à 15, **caractérisé en ce qu'**un autre composant est un deuxième bras (12) à plusieurs articulations, dont l'élément de tête porte une caméra (13).

17. Dispositif selon l'une quelconque des revendications 9 à 16, **caractérisé en ce que** l'installation servant à amener les feuilles (14) présente la forme d'un système de transfert (3) avec une station de chargement (15), une station terminale (4) et une file de rail (17) reliant les stations (15, 4).

18. Dispositif selon la revendication 17, **caractérisé en ce que** la station de chargement (15) et la station terminale (4) sont respectivement constituées d'un bâti (16, 25) allongé rectangulaire, dans lequel la file de rails (17) se termine à chaque fois côté fond, et **en ce qu'**un chariot de transport (22) mobile sur la file de rails (17) est prévu qui comporte au moins une table de levage (23).
